# EUROPEAN PATENT SPECIFICATION

(11) **EP 2 575 224 B1**
(45) Date of publication and mention of the grant of the patent: **23.03.2016**
(21) Application number: 12186436.7
(22) Date of filing: 27.09.2012
(51) Int. Cl.: H02G 3/18, H02G 3/38

(54) **A device for an embedment box of a hollow floor structure**
Ein Gerät für eine Einbaudose für Hohlboden
Un dispositif pour une boîte d'encastrement pour plancher creux

(30) Priority: 28.09.2011 SE 1150893
(43) Date of publication of application: 03.04.2013
(73) Proprietor: Schneider Electric Industries SAS, 92500 Rueil-Malmaison (FR)
(72) Inventor: Eriksson, Staffan, 611 56 NYKÖPING (SE)
(74) Representative: Groth & Co. KB

(56) References cited:
- EP-A2- 2 083 490
- WO-A1-03/104587
- DE-U1-202006 001 321
- GB-A- 2 257 846

## Description

### Technical Field

The present invention relates to the area of the installation of electrically conducting cables in floor structures and particularly in hollow floor structures.

### Background of the Invention

In the new production of blocks of offices, prefabricated hollow floor structures, so-called HDF floor structures, are often used for providing the different floor plans. The floor structures are delivered in lengths of up to 12 m having 4 to 6 longitudinal tubular hollow spaces, the floor structure is formed in such a way that no additional reinforcement of its strength is needed, which means that, in order to complete the floor, it is desired to apply as little self-levelling screed/concrete as possible, which means a layer from a few centimetres or more.

Existing embedment systems of connection boxes require a topping of self-levelling screed/concrete from 70 mm to at least 100 mm. The problem of said embedment systems is that the internal space in the floor box mounted in the embedment box for plug connection then becomes limited, which results in the lid of the floor box not being possible to close.

A combination of an embedment box and a hollow floor structure of concrete wherein the box comprises a bottom wall, side walls and end walls as well as at least one top wall, which walls limit the inner volume of the box, at least one of said walls being provided with a breakout opening in which a tube adapter is mounted for the connection of a wiring tube for wiring/cabling, and wherein the top wall is provided with an upper part through which the inner volume of the box can be reached, and wherein the embedment box comprises a levelling device which is connected to a base part of the upper part as well as to a top part of the upper part is known from DE 20 200 600 132 U.

### The Object of the Invention

The object of the present invention is to provide a device for an embedment box of a hollow floor structure, which solves the above-mentioned problems by affording considerably more generous mounting volumes for the electrical installations than what previously has been the case.

The object is further to provide a mounting device having a levelling device for an embedment box in such a hollow floor structure.

The object is further to provide such a mounting device that gives the possibility of pre-setting the vertical level of the box in relation to the hollow floor structure and also of being able to fine-adjust said level either before or after the mounting of the embedment box.

### Summary of the Invention

By the present invention, as the same is seen in the independent claim, the above-mentioned objects are met, whereby said disadvantages have been eliminated. Suitable embodiments of the invention are defined in the dependent claims.

The invention is based on using the longitudinal channels in the hollow floor structure for the installation of floor boxes and also for the cabling in the longitudinal channels thereof, without, by this installation and cabling, altering the strength of the hollow floor structure. This is provided by mounting an embedment box in the hollow floor structure. Cabling in another direction than in the longitudinal channels of the floor structure may be carried out in partition walls or in false ceilings of the floor plan below. In addition, cablings may be effected transversely to the hollow space channels of the floor structure by the embedment box having connections for cabling ducts also on the upper side.

The invention concerns a device for an embedment box of a hollow floor structure. The embedment box comprises a bottom wall, side walls, and end walls as well as at least one top wall, which walls limit the inner volume of the box. At least one of said walls is provided with a breakout opening in which a tube adapter is mounted for the connection of a wiring tube for wiring/cabling. The top wall is further provided with an upper part through which the inner volume of the box can be reached. Size-wise, the width of the box is smaller than the width of a channel in the hollow floor structure. The device comprises a levelling device, which is connected to a base part of the upper part as well as to a top part of the upper part. The levelling device is arranged in such a way that the level of the top part in relation to the base part and thereby to the surface of the hollow floor structure can be adjusted when the embedment box is mounted in the hollow floor structure. The levelling device contributes to allowing a final adjustment of the level of the upper part in particular after the embedment box has been mounted. Such an adjustment implies that a minimization of applied concrete or self-levelling screed can be made, which represents a weight saving and cost saving at the same time as generous mounting volumes in the box are afforded.

In one embodiment of the invention, the levelling device comprises a levelling screw, which in its one end is provided with threads, which are in engagement with the corresponding threads of the base part, as well as that the other end of the levelling screw is provided with a position-fixing device for the top part. Forming the levelling device with a screw implies that it is simple and easy to carry out the levelling using conventional tools.

In one embodiment of the invention, the position-fixing device comprises a screw holder fixedly connected to the under side of the top part, the second end of the levelling screw being position-fixed in the screw holder but rotatably arranged in the same. The embodiment allows easy manoeuvring of the rotation of the levelling screw and thereby an adjustment of the level of the top part.

In one embodiment of the invention, the top part is provided with a levelling hole, through which a tool has access to the levelling screw and can rotate the same. The access to the levelling screw is formed in a very easy way by this embodiment, which in addition allows access from the interior of the top part.

In one embodiment of the invention, the top part is provided with a cover lid provided with a hole oriented in line with the levelling hole. The cover lid protects a mounting frame for electrical apparatuses and the inside of the embedment box from dirt and casting residues.

Furthermore, the invention comprises embodiments wherein the outside of some one of the walls of the embedment box is provided with at least one bracket attachment onto which an adjustable mounting bracket is mounted. These embodiments allow an efficient mounting of the embedment box in the hollow floor structure and can by their adjustability be coarse-adjusted already upon the mounting in order to be combined with the levelling option that provides a fine adjustment. Hereby, both the rough and fine adjustment may either be made directly upon the mounting of the embedment box or be made in two steps in each casting. Thus, the combination is advantageous since it allows considerably more possibilities of different mounting cases. The adjustability of the mounting bracket means that a fitter already upon the mounting of the box can adjust the same to an estimated final level of the finished concrete floor surface. This mounting can also be made for different installation alternatives of tubings, which optimizes the installation work considerably.

In a further embodiment of the invention, the mounting bracket is rotatably and lockably connected to the bracket attachment. This embodiment allows additional selectable levels for a coarse adjustment of the mounting of the embedment box. Thus, this rotatability further increases the installation alternatives by the fact that different vertical positions can be selected.

In a further embodiment of the invention, the mounting bracket is formed as an L-shaped means having a first branch, provided with a position hole for the fastening to said bracket attachment, as well as a second branch, oriented 90° from the first branch and provided with at least one fixing hole for the fastening to the surface of the hollow floor structure. This embodiment specifies the embodiment of a suitable mounting bracket that is both inexpensive and operationally safe. This angled design of the mounting bracket implies a very rigid clamping during an embedment procedure when the embedment box on no account must be dislodged from its position.

In a further embodiment of the invention, the position hole of the first branch is formed as a slot having an extension in the direction of the first branch. By said slot shape of the position hole, a possibility of further adjustment of the placement of the mounting bracket in the vertical direction of the embedment box is obtained, which further facilitates the levelling interval. Thus, this slot shape further increases the possibilities of more accurately determining the vertical position of the embedment box at the same time as four discrete positions can be selected by only one fixing screw.

In a further embodiment of the invention, the walls of the embedment box are provided with four bracket attachments each one of which provided with a mounted adjustable mounting bracket intended for the mounting of the embedment box in the hollow floor structure. The arrangement of four points of attachment for the embedment box gives a symmetrical load in the points of attachment since the attachments are placed at the corners of the rectangularly shaped upper part to the box. A symmetrical placement of the brackets implies a favourable distribution of load upon the mounting of the entire embedment box. This is also particularly suitable when the upper part is formed with four levelling options, i.e., one at each corner of the rectangular upper part to the box. By affording several fastening places, greater possibilities of adjustments as well as safer fixation are provided.

### Brief Description of the Drawings

Now, the invention will be described in more detail, reference being made in connection with the accompanying drawing figures. The drawing figures show only explanatory sketches intended to facilitate the understanding of the invention.
- Figure 1: shows a perspective view of an embedment box according to the present invention mounted in a hollow floor structure.
- Figure 2: shows only the embedment box in perspective view with the mounting appliances thereof according to the invention.
- Figure 3: shows a section view along a hollow space in the floor structure having an embedment box mounted.
- Figure 4a: shows a section view transverse to a hollow space in the floor structure with the section taken also through the embedment box.
- Figure 4b: shows an enlargement of the encircled part in Figure 4a.
- Figure 5: shows only the embedment box in perspective view with the mounting appliances thereof according to the invention adjusted for a level position A.
- Figure 6: shows only the embedment box in perspective view with the mounting appliances thereof according to the invention adjusted for a level position D.
- Figure 7: shows a top view of an area of the floor structure having a hollow space wherein an embedment box is mounted.

### Description of the Invention

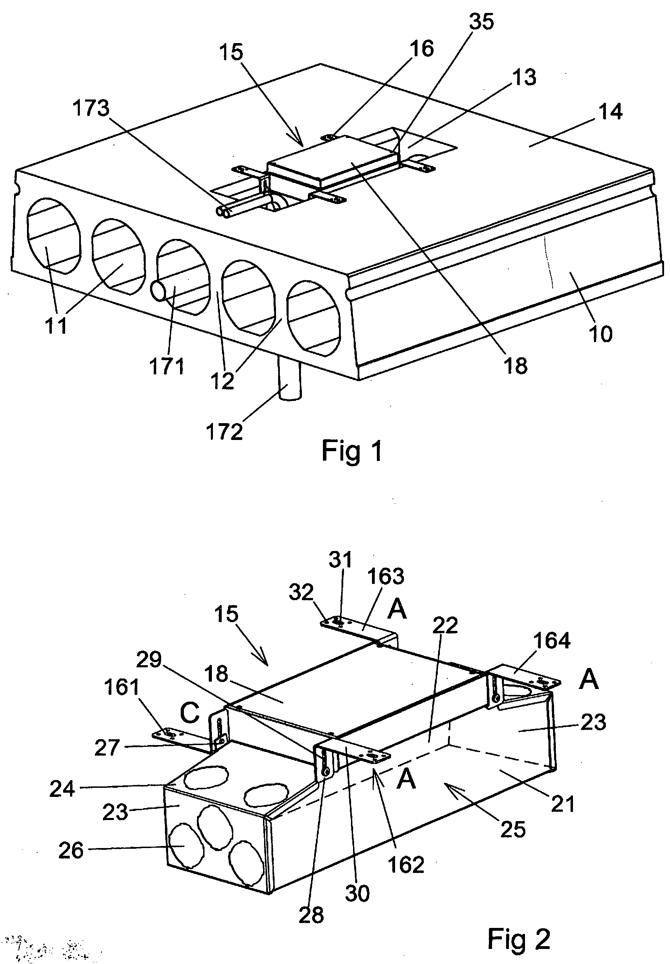

Figure 1 shows a hollow floor structure 10 of concrete, which is provided with longitudinal hollow spaces in the form of channels 11. Between the channels 11, webs 12 are formed, which are the principal force-absorbing part of the hollow floor structure and therefore determine the strength of the floor structure. An embedment hole 13 is recessed in the surface 14 of the hollow floor structure 10 straight above one of the channels 11. In the embedment hole, an embedment box 15 is lowered and attached by means of at least one adjustable mounting bracket 16. The figure shows four identical mounting brackets, which all are mounted onto the embedment box in the same relative position. Furthermore, a wiring tube 171 is connected to the end wall of the embedment box 15 for wiring/cabling to the box. The wiring tube 171 extends through the channel 11 in the hollow floor structure 10 in which the embedment box 15 is mounted. The figure also shows that second wiring tubes 172 may be connected to the embedment box 15 from the bottom wall thereof and thereby extend out through the bottom of the channel of the hollow floor structure. Also third wiring tubes 173 may be connected to the embedment box 15 from the top wall thereof and thereby extend upward and out through the embedment hole 13. Thus, different types of wiring tubes may be connected to different side walls of the embedment box and extend out through the hollow floor structure in several conceivable ways. The embedment box 15 is furthermore provided with an upper part 18 connected to the top wall of the embedment box 15. The figure also shows that the level of the upper part in relation to the surface 14 of the hollow floor structure 10 can be adjusted by a levelling device 35.

Figure 2 shows the proper embedment box 15, which is provided with a bottom wall 21, side walls 22, and end walls 23 as well as a top wall 24 on each side of the upper part 18 of the embedment box. Hereby, the walls limit the inner volume 25 of the box, which can be reached via the upper part 18. The figure also shows that the embedment box is provided with breakout openings 26 placed in the end wall 23 as well as in the top walls 24. As previously mentioned, also the bottom wall may be provided with such breakout openings. The embedment box 15 is provided with four bracket attachments 27 symmetrically placed around the upper part 18. Four adjustable mounting brackets 161, 162, 163, 164 are mounted onto said bracket attachments by a screw, each one of which brackets is formed as an L-shaped means having a first branch 28, provided with a slot-shaped position hole 29 for the fastening to said bracket attachment 27, as well as a second branch 30, oriented 90° from the first branch and provided with at least one fixing hole 31 for the fastening to the surface of the hollow floor structure.

Also the fixing hole 31 of the second branch 30 is formed as a slot having an extension in the direction of the second branch. As also is shown in the figure, the second branch is further provided with four additional fixing holes 32, which are placed laterally displaced as well as longitudinally displaced in the branch in relation to said slot-shaped fixing hole.

By the fact that the position hole 29 of the first branch 28 is formed as a slot, the mounting bracket can be displaced to the two end positions of the slot, which define two different mounting levels of the embedment box in relation to the surface of the hollow floor structure. Furthermore, the mounting bracket can be rotated 180° around its bracket attachment, wherein two additional mounting levels defined are usable. In one embodiment, said levels are fixed to A = 0, B = 25 mm, C = 50 mm and D = 75 mm. The figure shows the first mounting bracket 161 in the position C and the second 162, the third 163, and the fourth mounting bracket 164 in the position A. Since the position hole is formed as a slot, naturally variable mounting positions are feasible. An alternative to said slots is to provide the first branch with two holes, suitably at a distance from each other of 25 mm in order to achieve the same discrete four positions. Both the slot and possible holes are centrally placed in the branch, oriented longitudinally. As is seen in the figure, the mounting brackets are fixed to the embedment box in their respective positions by means of a fixing screw.

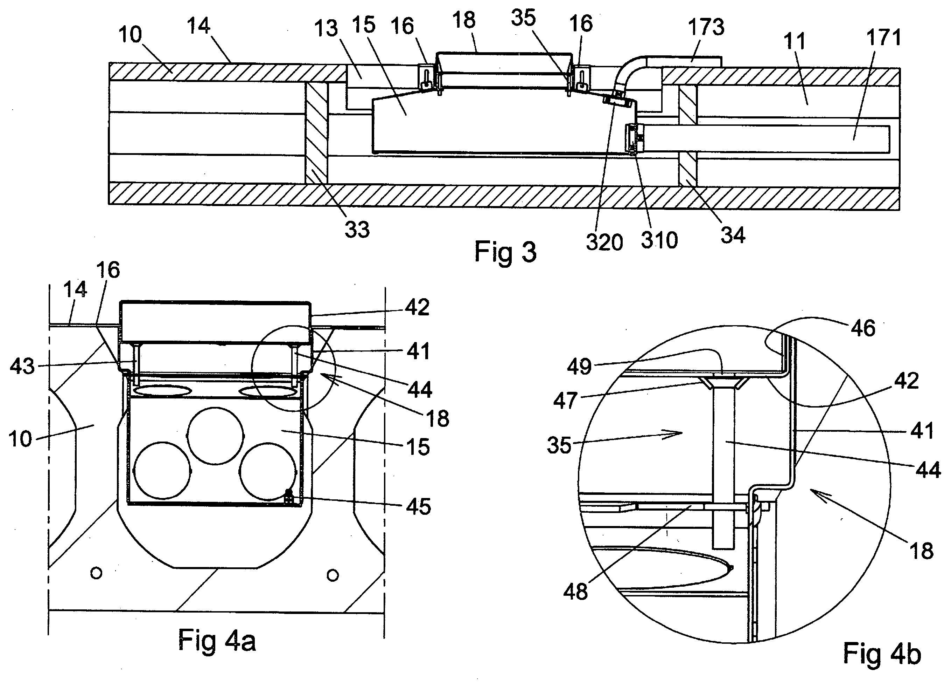

Figure 3 shows a longitudinal section through an embedment box 15 mounted in a hollow floor structure 10. The mounting brackets 16 of the embedment box have been mounted in one suitable position of the four discrete positions, i.e., the separated positions, wiring tubes 171, 173 having been mounted to a first tube adapter 310 in the breakout opening of an end wall as well as to a second tube adapter 320 in the breakout opening of a top wall in the embedment box 15. Next, the embedment box 15 is lowered into the embedment hole 13, wherein it is anchored via the mounting brackets in the surface 14 of the hollow floor structure. Next, the channel 11 of the hollow floor structure is sealed on both sides of the embedment box 15 by a homogeneous first pour stop 33 and a tube-penetrable second pour stop 34, which pour stops block flowing concrete from running out into the channel when the embedment hole 13 is filled with concrete up to the level of the surface 14 of the hollow floor structure. In the mounting case shown in the figure, wiring tubes 173 are mounted to the embedment box to run on top of said surface 14, either parallel to the channels or at some angle to the same, for instance 90°, and therefore concrete should be filled up to or above the level of the tubes either in the same filling step or upon an extra filling-up step. In order to accomplish an exact adjustment of the upper part 18 of the embedment box in relation to the finished concrete floor, the upper part 18 is variably adjustable by the levelling device 35. In the embodiment illustrated, levelling of the upper part can be effected in the interval of 0-25 mm, wherein fine adjustment can be made variably into positions between said four discrete positions of the embedment box. Thus, in the figure, the upper part 18 is levelled to a position wherein a replenishment of concrete can be made above the wiring tube 173 and on a level with the upper part. Also this levelling degree is shown in Figure 1. In order to accomplish a horizontal mounting of the upper part, the same is provided with levelling in all four corners.

Figure 4a shows a cross-section through a hollow floor structure 10 and an embedment box 15 mounted therein. The upper part 18 consists of a base part 41 and a top part 42, the figure showing that the top part has been levelled to a level that is situated above the surface 14 of the floor structure and the mounting brackets 16 by means of the levelling screws 43, 44. Since the embedment box 15 will contain electrical equipment, the bottom of the box is internally provided with a ground connection 45.

Figure 4b shows a detailed view of the levelling device 35. The figure shows the base part 41 of the upper part 18 and the top part 42 thereof inside which a cover lid 46 is inserted to protect the top part from dirt and the like. The under side of the top part is provided with a screw holder 47 in which a levelling screw 44 is secured but can rotate. The levelling screw is provided with threads, which co-operate with the corresponding levelling threads of a holder device 48 in the base part of the embedment box. Furthermore, the top part 42 is provided with a levelling hole 49 through which a screwdriver can reach the head of the levelling screw in order to rotate the screw and in such a way adjust the level of the top part 42 of the upper part 18. Also the upper side of the cover lid 46 is provided with a hole oriented in line with the levelling hole 49 for allowing levelling to be made without removing the cover lid.

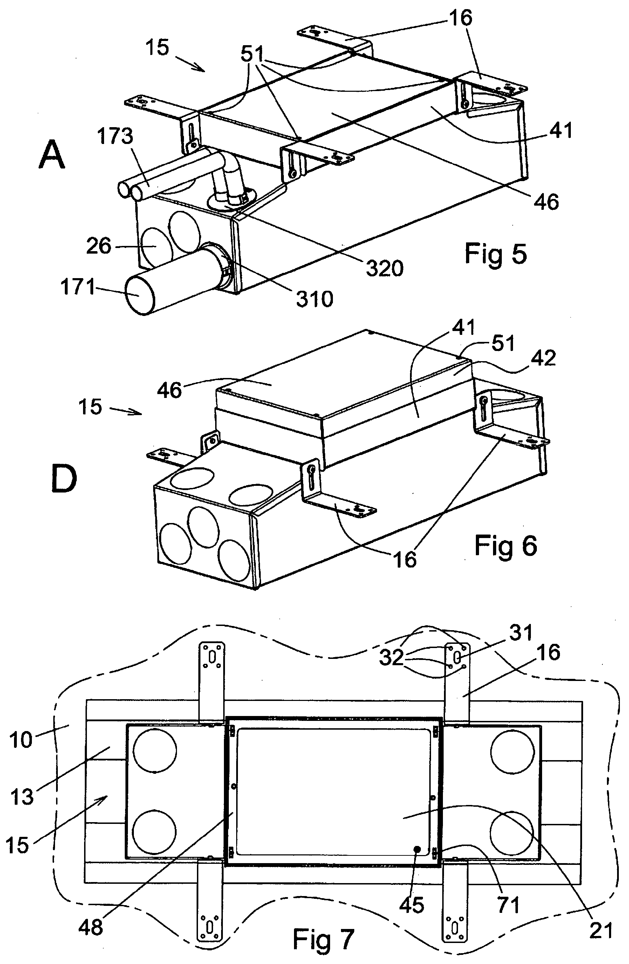

Figure 5 shows the embedment box 15 with wiring tubes 171, 173, so-called VP tubes, in two dimensions connected to the box via tube adapters 310, 320 that are mounted in breakout openings 26. The mounting brackets 16 are mounted in their top position A, i.e., for the lowest possible mounting of the embedment box. The levelling of the top part of the upper part is adjusted to its lowest level by the four levelling screws having been rotated to said level by a screwdriver through the four holes 51 in the cover lid 46. In this connection, the top part is downwardly adjusted and is inside the base part 41.

Figure 6 shows the embedment box 15 with the mounting brackets 16 mounted in their lowermost position D, i.e., for the highest possible mounting of the embedment box. Furthermore, the levelling of the top part 42 is adjusted to its highest level in relation to the base part 41 by means of the levelling screws through the holes 51. With the mounting levels and adjustment intervals indicated above, this implies that the level of the top part 42 and of the cover lid 46 is lying 100 mm above the surface of the hollow floor structure of the embodiment shown when the embedment box 15 is mounted.

By the fact that the levelling screws are four in number and placed in each corner of the upper part, the level of the top part and the cover lid can accordingly be adjusted by means of laser measuring devices to become completely horizontal.

Figure 7 shows a top view of the embedment box 15 mounted in the embedment hole 13 of the hollow floor structure 10. One fixing hole 31 of the mounting brackets 16 is-slot-shaped while the other fixing holes 32 are circular and laterally and longitudinally displaced in relation to the slot-shaped fixing hole 31. The cover lid of the upper part is removed and shows a levelling thread 71 of the holder device 48, which levelling thread co-operates with the previously described levelling screws. The holder device 48 acts in addition on one hand as fitting frame in which outlets are mounted and on the other hand as mounting appliance for the floor box that later, after flooring has been laid-out, is mounted in the embedment box. The figure also shows the ground connection 45 on the bottom wall 21 of the box.

A method for the mounting of an embedment box of a hollow floor structure is effected according to the following steps where indicated reference numerals relate to the drawing figures:
1. Either before or after the hollow floor structure has been lifted in place, an embedment hole 13 is recessed in the hollow floor structure 10 with a width that does not exceed the width of the hollow space width of the floor structure, wherein said recessed hole does not affect the strength of the floor structure. In one application of the invention, the width is 170 mm. The hole making may accordingly be made on site or in the factory where the hollow floor structure is produced.
2. Next, the number of openings 26 in the embedment box 15 required for the connection of the pipes and tubes appropriate in the application in question are opened. In one embodiment of the embedment box, there are six holes in its bottom, three holes in a short side and four holes in its upper side.
3. Next, tube adapters 310, 320 are mounted in the open holes in the box. The tube adapters are snapped-on in the embedment box and are preferably available in the following tube configurations: 2×16, 2×20, 1×25, 1×32, 1×40 and 1×50 mm. In the adapters, there are lock plates that prevent the pipes connected to the adapters from coming loose from the embedment box after mounting. Wiring tubes from the bottom of the embedment box are meant to exit in the false ceiling of the floor plan below. Wiring tubes from the short sides of the embedment box are meant to be fed up into partition walls or into partition walls false ceiling of the floor plan below. Wiring tubes from the front side of the embedment box are meant to be fed on top of the floor structure in those cases the thickness of the self-levelling screed applied after the levelling allows this.
4. Next, the mounting brackets 16 are mounted onto the embedment box 15 for a coarse adjustment of its height to the estimated level of the finished floor. The levels that can be selected depend on how the attachment is placed on the embedment box. In one embodiment, each attachment can be placed in one of the following four positions: A = 0-25 mm; B = 25-50 mm; C = 50-75 mm; D = 75-100 mm.
5. After the mounting of the mounting brackets, the embedment box is lowered into the recessed embedment hole 13 in the hollow floor structure 10.
6. After that, the wiring tubes 171, 172, 173 are connected to the tube adapters. These tubes extend on one hand down to false ceilings and on the other hand into the longitudinal channels 11 in the hollow floor structure 10. From the channels, the wiring tubes may be led up or down in connecting partition walls to the hollow floor structure. The tubes may also be led on the upper side of the floor structure in those cases the layer thickness of the caston layer of self-levelling screed/concrete allows this.
7. Next, the position of the embedment box 15 is longitudinally adjusted in the embedment hole 13.
8. After that, the embedment box is fixed in the upper side of the hollow floor structure 10 by screwing or by means of a bolt gun in the preferably prepunched holes of the mounting brackets.
9. After that, the longitudinal channel 11 in the hollow floor structure 10 is closed by pour stops 33, 34 in the form of a plug of mineral wool, foam or another material that prevents concrete from running into the channels in the floor structure.
10. Next, the gap around the embedment box is filled with concrete up to the level of the hollow floor structure.
11. After that, the height of the upper part of the embedment box is fine-adjusted in the interval of 0-25 mm by means of the levelling screws of the upper part, and by said fine adjustment, the adjustable upper part is levelled in place so that it becomes horizontal and is on a level with the finished concrete floor to be made. The levelling screws of the four corners of the upper part of the embedment box make that the upper part can lie completely horizontally with the finished floor.
12. Next, concrete or self-levelling screed is laid out over the floor structure in order to get the finished concrete floor on top of which a carpet or another flooring is laid.
13. After the filling has set, the protective lid of the embedment box is lifted away, outlets being mounted in the fitting frame of the embedment box. Next, the outlets are connected and the lid is put back into the hole to prevent anyone from getting hurt if the hole is open.
14. Next, the flooring is laid on the finished concrete floor, a floor box being mounted in the hole. The fitting frame is now mounted in the floor box in which the frame and then the respective apparatus, such as high- or low-voltage outlet, are mounted.

This described method for mounting is a feasible mounting method within the scope of the invention, but it is also possible that the mounting steps 10, 11 and 12 are carried out simultaneously by, before the mounting step 10, adjusting also the levelling to the final level and after that both filling the gap around the embedment box with concrete and filling up to the final floor level.

## Claims

1. Combination of a hollow floor structure (10) of concrete and an embedment box (15), the embedment box (15) comprising a bottom wall (21), side walls (22), and end walls (23) as well as at least one top wall (24), which walls limit the inner volume (25) of the box, at least one of said walls being provided with a breakout opening (26) in which a tube adapter (310, 320) is mounted for the connection of a wiring tube (171, 172, 173) for wiring/cabling, and that the top wall (24) is provided with an upper part (18) through which the inner volume of the box can be reached, and that the embedment box (15) comprises a levelling device (35), which is connected to a base part (41) of the upper part (18) as well as to a top part (42) of the upper part (18), wherein the embedment box (15) is mounted in the said hollow floor structure (10) of concrete, which is provided with longitudinal hollow spaces in the form of channels (11) and wherein the width of the box is smaller than the width of a channel (11) in the hollow floor structure (10) and wherein the level of the top part in relation to the base part and thereby to the surface (14) of the hollow floor structure can be adjusted when the embedment box (15) is mounted in the hollow floor structure (10).

2. Combination of a hollow floor structure (10) of concrete and an embedment box (15) according to claim 1, **characterized in that** the levelling device (35) comprises a levelling screw (44), which in its one end is provided with threads, which are in engagement with the corresponding threads of the base part (41), as well as that the other end of the levelling screw is provided with a position-fixing device for the top part (42).

3. Combination of a hollow floor structure (10) of concrete and an embedment box (15) according to claim 2, **characterized in that** the position-fixing device comprises a screw holder (47) fixedly connected to the under side of the top part (42), the second end of the levelling screw (44) being position-fixed in the screw holder (47) but rotatably arranged in the same.

4. Combination of a hollow floor structure (10) of concrete and an embedment box (15) according to claim 3, **characterized in that** the top part (42) is provided with a levelling hole (49) through which a tool has access to the levelling screw (44) and can rotate the same.

5. Combination of a hollow floor structure (10) of concrete and an embedment box (15) according to claim 4, **characterized in that** the top part (42) is provided with a cover lid (46) provided with a hole oriented in line with the levelling hole (49).

6. Combination of a hollow floor structure (10) of concrete and an embedment box (15) according to any one of claims 1-5, **characterized in that** the outside of some one of the walls of the embedment box is provided with at least one bracket attachment (27) onto which an adjustable mounting bracket (16) is mounted.

7. Combination of a hollow floor structure (10) of concrete and an embedment box (15) according to claim 6, **characterized in that** the mounting bracket (16) is rotatably and lockably connected to the bracket attachment (27).

8. Combination of a hollow floor structure (10) of concrete and an embedment box (15) according to any one of claims 6-7, **characterized in that** the mounting bracket (16) is formed as an L-shaped means having a first branch (28), provided with a position hole (29) for the fastening to said bracket attachment (27), as well as a second branch (30), oriented 90° from the first branch (28) and provided with at least one fixing hole (31) for the fastening to the surface (14) of the hollow floor structure (10).

9. Combination of a hollow floor structure (10) of concrete and an embedment box (15) according to claim 8, **characterized in that** the position hole (29) of the first branch (28) is formed as a slot having an extension in the direction of the first branch (28).

10. Combination of a hollow floor structure (10) of concrete and an embedment box (15) according to any one of claims 6-9, **characterized in that** the walls of the embedment box are provided with four bracket attachments (27) each one of which provided with a mounted adjustable mounting bracket (16) intended for the mounting of the embedment box in the hollow floor structure.

## Patentansprüche

1. Kombination aus einer Hohlbodenstruktur (10) aus Beton und einer Einbaudose (15), wobei die Einbaudose (15) eine untere Wand (21), Seitenwände (22) und Endwände (23) sowie mindestens eine obere Wand (24) umfasst, wobei die Wände das Innenvolumen (25) der Dose begrenzen, wobei mindestens eine der Wände mit einer Ausbrechöffnung (26) bereitgestellt ist, in der ein Rohradapter (310, 320) zum Verbinden eines verdrahteten Rohrs (171, 172, 173) zum Verdrahten/Verkabeln montiert ist, wobei die obere Wand (24) mit einem oberen Teil (18) bereitgestellt ist, durch den das Innenvolumen der Dose erreicht werden kann, wobei die Einbaudose (15) eine Nivelliereinrichtung (35) umfasst, die mit einem Basisteil (41) des oberen Teils (18) sowie mit einem Oberteil (42) des oberen Teils (18) verbunden ist, wobei die Einbaudose (15) in der Hohlbodenstruktur (10) aus Beton montiert ist, die mit längs verlaufenden Hohlräumen in Form von Kanälen (11) bereitgestellt ist, wobei die Breite der Dose kleiner als die Breite eines Kanals (11) in der Hohlbodenstruktur (10) ist, wobei die Nivellierung des Oberteils in Bezug auf das Basisteil und somit der Oberfläche (14) der Hohlbodenstruktur eingestellt werden kann, wenn die Einbaudose (15) in der Hohlbodenstruktur (10) montiert ist.

2. Kombination aus einer Hohlbodenstruktur (10) aus Beton und einer Einbaudose (15) nach Anspruch 1, **dadurch gekennzeichnet, dass** die Nivelliereinrichtung (35) eine Nivellierschraube (44) umfasst, deren eines Ende mit Gewinde bereitgestellt ist, das mit dem zugehörigen Gewinde des Basisteils (41) in Eingriff wird, sowie dadurch, dass das andere Ende der Nivellierschraube mit einer Positionsfixiervorrichtung für das Oberteil (42) bereitgestellt ist.

3. Kombination aus einer Hohlbodenstruktur (10) aus Beton und einer Einbaudose (15) nach Anspruch 2, **dadurch gekennzeichnet, dass** die Positionsfixiervorrichtung eine Schraubenhalterung (47) umfasst, die fest mit der Unterseite des Oberteils (42) verbunden ist, wobei das zweite Ende der Nivellierschraube (44) in der Schraubenhalterung (47) an ihrer Position fixiert ist, aber drehbar darin angeordnet ist.

4. Kombination aus einer Hohlbodenstruktur (10) aus Beton und einer Einbaudose (15) nach Anspruch 3, **dadurch gekennzeichnet, dass** das Oberteil (42) mit einem Nivellierloch (49) bereitgestellt ist, durch das ein Werkzeug Zugang zur Nivellierschraube (44) hat und diese drehen kann.

5. Kombination aus einer Hohlbodenstruktur (10) aus Beton und einer Einbaudose (15) nach Anspruch 4, **dadurch gekennzeichnet, dass** das Oberteil (42) mit einem Deckel (46) bereitgestellt ist, der mit einem Loch bereitgestellt ist, das in Linie mit dem Nivellierloch (49) ausgerichtet ist.

6. Kombination aus einer Hohlbodenstruktur (10) aus Beton und einer Einbaudose (15) nach einem der Ansprüche 1-5, **dadurch gekennzeichnet, dass** die Außenseite einer der Wände der Einbaudose mit mindestens einer Bügelbefestigung (27) bereitgestellt ist, auf der ein verstellbarer Montagebügel (16) montiert ist.

7. Kombination aus einer Hohlbodenstruktur (10) aus Beton und einer Einbaudose (15) nach Anspruch 6, **dadurch gekennzeichnet, dass** der Montagebügel (16) drehbar und verriegelbar mit der Bügelbefestigung (27) verbunden ist.

8. Kombination aus einer Hohlbodenstruktur (10) aus Beton und einer Einbaudose (15) nach einem der Ansprüche 6-7, **dadurch gekennzeichnet, dass** der Montagebügel (16) als L-förmiges Mittel mit einem ersten Zweig (28) ausgebildet ist, der mit einem Positionsloch (29) zur Befestigung an der Bügelanordnung (27) bereitgestellt ist, sowie mit einem zweiten Zweig (30), der 90° von dem ersten Zweig (28) ausgerichtet ist und mit mindestens einem Fixierloch (31) zum Befestigen an der Oberfläche (14) der Hohlbodenstruktur (10) bereitgestellt ist.

9. Kombination aus einer Hohlbodenstruktur (10) aus Beton und einer Einbaudose (15) nach Anspruch 8, **dadurch gekennzeichnet, dass** das Positionsloch (29) des ersten Zweigs (28) als Schlitz mit einer Ausdehnung in Richtung des ersten Zweigs (28) ausgebildet ist.

10. Kombination aus einer Hohlbodenstruktur (10) aus Beton und einer Einbaudose (15) nach einem der Ansprüche 6-9, **dadurch gekennzeichnet, dass** die Wände der Einbaudose mit vier Bügelbefestigungen (27) bereitgestellt sind, die jeweils mit einem montierten verstellbaren Montagebügel (16) bereitgestellt sind, der zum Montieren der Einbaudose in der Hohlbodenstruktur dient.

## Revendications

1. Combinaison d'une structure de plancher creuse (10) de béton et d'une boîte d'encastrement (15), la boîte d'encastrement (15) comprenant une paroi inférieure (21), des parois latérales (22) et des parois d'extrémité (23) ainsi qu'au moins une paroi supérieure (24), lesdites parois limitant le volume intérieur (25) de la boîte, au moins une desdites parois comportant une ouverture à rompre (26) dans laquelle un adaptateur de tube (310, 320) est monté pour la connexion d'un tube de câblage (171, 172, 173) pour un fil/câble, et la paroi supérieure (24) comprend une partie supérieure (18) à travers laquelle il est possible d'accéder au volume intérieur de la boîte, et la boîte d'encastrement (15) comprend un dispositif de mise à niveau (35) qui est connecté à une partie de base (41) de la partie supérieure (18) ainsi qu'à une partie de sommet (42) de la partie supérieure (18), dans laquelle la boîte d'encastrement (15) est montée dans ladite structure de plancher creuse (10) de béton, qui comporte des espaces creux longitudinaux sous la forme de canaux (11), et dans laquelle la largeur de la boîte est inférieure à la largeur d'un canal (11) dans la structure de plancher creuse (10), et dans laquelle le niveau de la partie supérieure par rapport à la partie de base et de ce fait par rapport à la surface (14) de la structure de plancher creuse peut être réglé lorsque la boîte d'encastrement (15) est montée dans la structure de plancher creuse (10).

2. Combinaison d'une structure de plancher creuse (10) de béton et d'une boîte d'encastrement (15) selon la revendication 1, **caractérisée en ce que** le dispositif de mise à niveau (35) comprend une vis de mise à niveau (44) qui dans sa première extrémité comporte des filets qui sont en prise avec les filets correspondants de la partie de base (41), alors que l'autre extrémité de la vis de mise à niveau est pourvue d'un dispositif de fixation en position pour la partie de sommet (42).

3. Combinaison d'une structure de plancher creuse (10) de béton et d'une boîte d'encastrement (15) selon la revendication 2, **caractérisée en ce que** le dispositif de fixation en position comprend un porte-vis (47) connecté fixement au côté inférieur de la partie de sommet (42), la deuxième extrémité de la vis de mise à niveau (44) étant fixée en position dans le porte-vis (47) mais agencé de façon rotative dans celui-ci.

4. Combinaison d'une structure de plancher creuse (10) de béton et d'une boîte d'encastrement (15) selon la revendication 3, **caractérisée en ce que** la partie de sommet (42) comporte un trou de mise à niveau (49) à travers lequel un outil a accès à la vis de mise à niveau (44) et peut faire tourner celle-ci.

5. Combinaison d'une structure de plancher creuse (10) de béton et d'une boîte d'encastrement (15) selon la revendication 4, **caractérisée en ce que** la partie de sommet (42) est pourvue d'un couvercle de recouvrement (46) comportant un trou orienté en ligne avec le trou de mise à niveau (49).

6. Combinaison d'une structure de plancher creuse (10) de béton et d'une boîte d'encastrement (15) selon l'une quelconque des revendications 1 à 5, **caractérisée en ce que** l'extérieur de plusieurs des parois de la boîte d'encastrement est pourvu d'au moins une attache de console (27) sur laquelle une console de montage réglable (16) est montée.

7. Combinaison d'une structure de plancher creuse (10) de béton et d'une boîte d'encastrement (15) selon la revendication 6, **caractérisée en ce que** la console de montage (16) est connectée de façon rotative et verrouillable à l'attache de console (27).

8. Combinaison d'une structure de plancher creuse (10) de béton et d'une boîte d'encastrement (15) selon l'une quelconque des revendications 6 ou 7, **caractérisée en ce que** la console de montage (16) est formée comme un moyen en forme de L présentant une première branche (28), comportant un trou de positionnement (29) pour la fixation à ladite attache de console (27), ainsi qu'une deuxième branche (30), orientée à 90° par rapport à la première branche (28) et comportant au moins un trou de fixation (31) pour la fixation à la surface (14) de la structure de plancher creuse (10).

9. Combinaison d'une structure de plancher creuse (10) de béton et d'une boîte d'encastrement (15) selon la revendication 8, **caractérisée en ce que** le trou de positionnement (29) de la première branche (28) est formé comme une fente présentant une extension dans la direction de la première branche (28).

10. Combinaison d'une structure de plancher creuse (10) de béton et d'une boîte d'encastrement (15) selon l'une quelconque des revendications 6 à 9, **caractérisée en ce que** les parois de la boîte d'encastrement sont pourvues de quatre attaches de console (27) dont chacune est pourvue d'une console de montage réglable montée (16) destinée au montage de la boîte d'encastrement dans la structure de plancher creuse.
